# EUROPEAN PATENT APPLICATION

(11) **EP 2 754 707 A1**
(43) Date of publication of application: **16.07.2014**
(21) Application number: 13305040.1
(22) Date of filing: 15.01.2013
(51) Int. Cl.: C09K 11/77, C03C 13/04, H01S 3/067, H04B 10/291

(54) **A material comprising an host matrix, rare earth ions and a metal atom cluster as sensitiser**

(71) Applicant: Université de Rennes 1, 35000 Rennes (FR); Centre National de la Recherche Scientifique (CNRS), 75016 Paris (FR); Université de Caen Basse Normandie, 14000 Caen (FR)
(72) Inventor: Molard, Yann, 35690 Acigne (FR); Amela-Cortes, Maria de Los Angeles, 35690 Acigne (FR); Cordier, Stéphane, 22980 Plelan le Petit (FR); Labbé, Christophe, 14280 Authie (FR); Cardin, Julien, 14280 Saint-Contest (FR); Rizk, Richard, 14000 Caen (FR)
(74) Representative: Regimbeau

(57) **Abstract**

This deals with a material (1) comprising an organic or inorganic matrix (2), rare earth ions (3) within the organic or inorganic matrix, and a sensitiser (4) for the rare earth ions,
wherein the sensitiser comprises luminescent cluster units containing metal atom clusters, the cluster unit being distributed around the rare earth ions, the metal clusters having an absorption spectrum broader than the absorption spectrum of the rare earth ions and emitting waves within the absorption spectrum of the rare earth ion when they are excited, and
wherein when the matrix is inorganic, the rare earth ions are trivalent.

## Description

### Technical field

This deals with the technical field of materials comprising an organic or inorganic matrix, rare earth ions homogeneously distributed throughout the organic matrix, and metal atom clusters as sensitisers for the luminescence of the rare earth ions.

### Prior art

Erbium ion emissions at 1540 nm and those of neodymium ions at 1319 nm are standard wavelengths used in telecommunication technology. However, because these rare earth elements have small absorption cross-sections, it is only possible to obtain emission for high pumping power or guides with long lengths.

One solution makes use of inorganic materials. In this solution, silicon nanoclusters (nc-Si) in thin films are used as sensitisers of rare earth elements for enhancing effectiveness of absorption cross-section of the rare earth elements. Silicon nanoclusters enable indirect excitation of the rare earth elements within a silica matrix enriched with silicon nanoclusters. Silicon nanoclusters not only increase the effective absorption cross-section of the rare earth elements but also absorb the energy of the laser pumping source over a broader bandwidth than the rare earth elements. The absorbed energy is then transferred to the rare earth ions increasing their effective excitation cross-section.

However, designing and optimising nc-Si-based materials containing rare earth elements have proven to be complex. Indeed, this implies, on one side, inversion of the population necessary for the amplification and, on the other side, the majority of the rare earth ions are coupled to sensitisers that should be less than 1 nm far; the sensitisers should be in high concentration.

The only available materials containing rare earth ions and nc-Si as sensitisers are thin films of oxide what leads to complex and multi-stepped shaping process. Other semiconductor materials such as III-V semiconductors (compounds composed of one element of the boron group and one element of the pnictogen group) and II-VI semi-conductors (compounds composed of one element of group 12 and one element of the chalcogen group) encounter equivalent manufacturing and shaping problems.

Homogeneous incorporation of nc-Si into an organic matrix like a polymer comes up against problems of phase segregation.

Another solution consists in coordinating highly absorbing organic antenna groups around the rare earth ions to increase the pump efficiency. However, this solution suffers from high sensitivity of organic antenna to premature ageing under irradiation.

### Summary

Thus, it is aimed at providing a solution to at least one of the drawbacks of the prior art presented above.

To this aim, a material comprising an organic matrix, rare earth ions within the organic matrix, and a sensitiser for the rare earth ions is provided;
wherein the sensitiser comprises luminescent cluster units containing metal atom clusters, the cluster unit being distributed around the rare earth ions, the metal clusters having an absorption spectrum broader than the absorption spectrum of the rare earth ions and emitting waves within the absorption spectrum of the rare earth ion when they are excited, and
wherein when the matrix is inorganic, the rare earth ions are trivalent.

Luminescent metal atom clusters can easily be incorporated into organic matrix such as polymeric organic matrix or liquid crystal matrix. They can act as sensitisers for rare earth ions homogeneously distributed throughout the organic matrix. As sensitisers, they yield rare earth emissions several times higher than by direct excitation and thus suitable for various applications depending on the wavelength where the rare earth element emits (Yb³⁺ for LASER, Nd³⁺ and Er³⁺ for telecommunication technology). Also, when the matrix used is an organic matrix, it is easy to work and shape. Therefore, the material can come in various shapes when an organic matrix is used.

It is also provided a use of the material as signal emitter for telecommunication purposes.

More in general, a use of luminescent metal atom clusters in organic or inorganic matrix for boosting luminescence of rare earth ions distributed throughout the organic matrix is provided.

### Drawings

Other aims, features and advantages would become apparent upon reading the following description with reference to the following illustrative and nonlimiting drawings:
- figure 1 shows schematically a material **1** comprising an organic matrix **2,** rare earth ions **3** homogeneously distributed throughout the organic matrix, and luminescent metal clusters **4** as sensitisers for the rare earth ions;
- figure 2 represents solid state luminescent spectra of materials P_{0.5c} (dashed line) of example 1 and P_{0.5} (plain line) of comparative example 1;
- figure 3 represents solid state luminescent spectra of materials P_{0.9c} (dashed line) of example 1 and P_{0.9} (plain line) of comparative example 1;
- figure 4 represents solid state luminescent spectra of materials P_{1.3c} (dashed line) of example 1 and P_{1.3} (plain line) of comparative example 1;
- figure 5 represents solid state absorption spectra of materials P_{1.3c} (dashed line) of example 1 and P_{1.3} (plain line) of comparative example 1;
- figure 6 is a graph illustrating luminescence intensity ratios measured at maximum of emission between 1,400 nm and 1,700 nm for P_{0.5C}/P_{0.5}, P_{0.9C}/P_{0.9} and P_{1.3C}/P_{1.3};
- figure 7 is a graph illustrating luminescence spectra of samples S_{y/c/50CB} (plain line), S_{y/c} (dashed line), S_{y} (dotted line) and S_{c} (dotted-dashed line) of example 5 between 940 nm and 1,020 nm;
- figure 8 is a graph illustrating luminescence spectra of samples T_{y/c} (plain line), T_{y/c/50CB} (dashed line), and T_{y} (dotted line) of example 6 between 950 nm and 1,000 nm; and
- figure 9 is a graph illustrating luminescence spectra of samples V_{y} (plain line), V_{y/c/5OCB} (dashed line), and V_{y/c} (dotted line) of example 7 between 950 nm and 1020 nm.

### Description

### Material

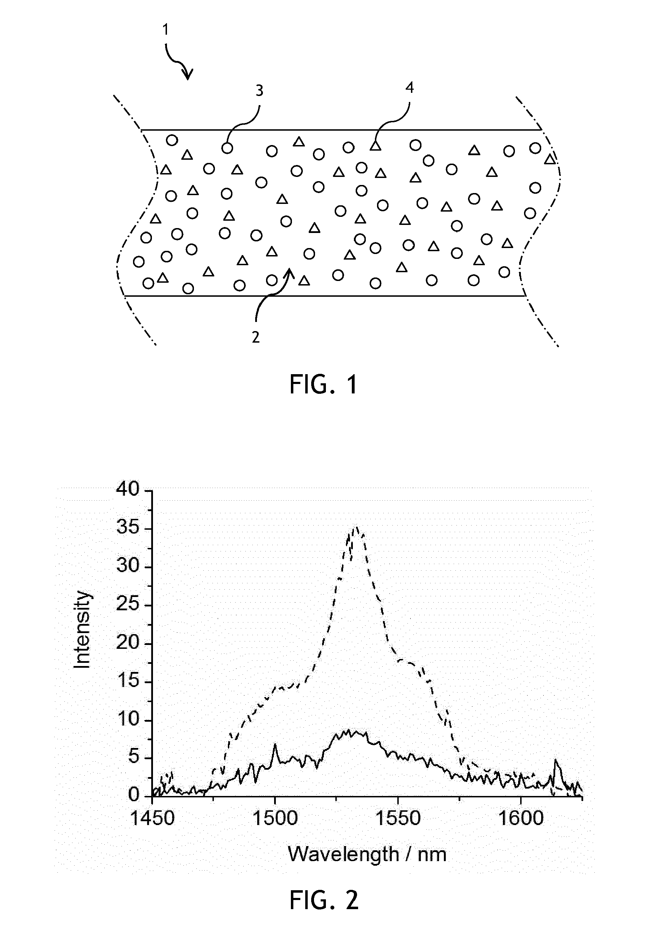

A material comprising an organic matrix, rare earth ions within the organic matrix and luminescent metal atom clusters as sensitisers for the rare earth ions is described hereafter with reference to figure 1.

The organic matrix functions as a support that can be easily shaped, for example into films, fibres, bulk materials, etc. The organic matrix can be a polymeric organic matrix or a crystal liquid matrix.

Suitable polymeric organic matrix can be obtained by mixing one or more polymers, one or more monomers, or a mixture thereof and allowed to reticulate. Polymers can be chosen from the group consisting of: polyamides, polycarbonates, polyolefins (such as polyethylene, naphtalate polyethylene and terephthalate polyethylene), polyimides, polyacrylates (such as polymethylmethacrylate), styrenic polymers (such as polystyrene), polyurethane, vinylpolychloride. Preferably, the polymer is polymethylmethacrylate (PMMA). Monomers can be chosen from the group consisting of: carboxylic acids, amines, biphenol-A, carbonates, phosgenes, olefins (such as ethylene), naphthalate, terephthalate, imides, acrylates (such as methylmethacrylate), styrene, urethane, vinyl chloride.

A "liquid crystal matrix" is a matrix which may flow like a liquid but the molecules of which it consists of may be oriented in a crystal like way. The liquid crystal matrix may be made of thermotropic components or lyotropic components which may contain or accept metallic components having liquid crystalline properties.

Thermotropic components and lyotropic components consist of organic molecules or mixtures of organic and inorganic components. Thermotropic components exhibit a phase transition into the liquid crystal phase as temperature is changed. Lyotropic components exhibit phase transitions as a function of both temperature and concentration of the component in a solvent.

For example, the liquid crystal matrix comprises at least one element chosen from the group consisting of: 4-pentyloxyl-4'-cyanobiphenyl, 4-pentyl-4'-cyanobiphenyl, 4-heptyloxyl-4'-cyanobiphenyl, 4-heptyl-4'-cyanobiphenyl, and a mixtures thereof.

Rare earth ions are ions of rare earth elements. Rare earth elements are chosen from the group consisting of: scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu). Preferably, when the matrix is inorganic, the rare earth elements are trivalent rare earth ions. Also, rare earth elements are preferably Yb, Er and Nd.

Preferably, concentration of rare earth ions is about 10¹⁰ ions/cm³ to about 10²⁰ ions/cm³ of the material, more preferably about 10¹⁵ ions/cm³ to about 10²⁰ ions/cm³. The most preferred concentration value is 10²⁰ rare earth ions per each cubic centimetre (ions/cm³) of material. If more than 10²⁰ ions/cm³ of material is used, auto-quenching phenomena occur. For a homogeneous rare earth ion distribution, 10²⁰ ions/cm³ means one rare earth ion per 2.15 nm³ of the material.

Rare earth ions can be distributed, preferably homogeneously, throughout the organic matrix or distributed throughout only an area thereof.

The Pair Distribution Function (PDF) Analysis from X-ray total scattering data and EXAFS (Extended X-Ray Absorption Fine Structure) analysis are relevant methods to determine the nanoscale structure and distortions of amorphous compounds. The PDF describes the distribution of distances between pairs of particles contained within a given volume. PDF is a technique widely used for the characterisation of amorphous or liquid systems. Combined used of PDF and EXAFS will enable the multi-scale characterization of materials containing rare earths ions and metal atom clusters. These are relevant methods to access to the local ordering and average ordering at medium and long range distances.

Another way to assess the homogeneity of the rare earth ion distribution is the use of transmission electron microscopy (TEM).

Another easy way to assess the homogeneity of the rare earth ion distribution is the homogeneity of the luminescence: if rare earth ion distribution is not homogeneous within the material, the luminescence will not be so as well. Also, if the material is not homogeneous, phase segregation will occur within the matrix of the material.

Rare earth ions are distributed within the organic matrix from a rare earth precursor. The rare earth precursor can be a salt or a complex included in a salt comprising a rare earth cation and organic anion(s) and or organic ligand(s).

When the rare earth precursor is a salt, it may be chosen from the group consisting of: TRX₃, wherein TR means a rare earth ions and X is a chloride, bromide or iodine anion.

When the rare earth precursor is a complex, it may be chosen from the group consisting of: TR(tmhd)₃, TR(fod)₃, TR(dmb)₃Phen, TR(tta)₄, TR(dipicolinate)₃ and mixtures thereof. In these molecules, TR means a rare earth ions, tmhd is 2,2,6,6-tetramethyl-3,5-heptanedionate, fod is 6,6,7,7,8,8,8-heptafluoro-2,2-dimethyl-3,5-octanedionate, dbm is dibenzoylmethane, Phen is 1,10-phenanthroline and tta is 2-thenoyltrifluoroacetonate. The preferred rare earth precursor is TR(tmhd)₃

The charge of each complex is counter-balanced by one or more organic cations that may generate liquid crystal properties different from their own-one once interacting with the rare earth complex. These organic cations allow the miscibilization of the rare earth complex in commercially available liquid crystal compounds or mixtures.

Organic ligands of the rare earth cation interact with the organic or inorganic matrix via pi-pi stacking, dipole-dipole or van der Waals interactions. Indeed rare earth ions are statistically and homogeneously distributed in the organic or inorganic matrix. The homogeneous distribution can be evaluated by PDF and EXAFS.

The metal atom clusters are distributed around the rare earth ions. By "around" it is understood that the metal clusters are in the vicinity of the rare earth ions and sufficiently close to the latter that the rare earth ions can benefit from the emission spectrum of the metal clusters. This can be observed with PDF and EXAFS analyses. Luminescence is emission of light by a substance not resulting from heat; this distinguishes luminescence from incandescence, which is light emitted by a substance as a result of heating. It is, thus, a form of cold body radiation. The energy of the electrons shifts upon excitation before going back to its base level. When the electrons return to their base level of energy, light is emitted. Fluorescence is luminescence wherein light emission occurs right after excitation, usually 10⁻⁹ to 10⁻⁶ s after the excitation. Phosphorescence is luminescence wherein light emission occurs after a longer lapse of time from the excitation, usually 10⁻³ to 10 s.

The metal atom clusters have an absorption spectrum broader than the absorption spectrum of the rare earth ions. When they are excited, the metal clusters emit photons which wavelength falls within the absorption spectrum of the rare earth ions. This enables an indirect sensitisation of the rare earth ions over a broad wavelength spectrum. Thus, operating cost can be substantially lowered because standard and common laser pumps, diodes and lamps can be used.

The metal cluster presents a wide absorption spectrum, more in particularly from UV to visible red region, that is to say from about 100 nm to about 800 nm, more preferably from about 350 nm to about 500 nm.

Definition of a metal atom cluster is given by F.A. Cotton in Inorg. Chem. 1964, 3, 1217 as: "a finite group of metal atoms that are held together mainly, or at least to a significant extent, by bonds directly between the metal atoms, even though some non-metal atoms may also be intimately associated with the cluster".

In the following description, "metal atom cluster" is understood as at least two metal atoms which are covalently bound together and form metal-metal bonds. Metal-metal bonds enable delocalisation of electrons on all metal atoms and bonds. The metal atoms of the metal atom cluster form a polyhedron. Each metal atom is considered as occupying a vertex (corner point) of the polyhedron.

Thus, the metal atom cluster comprises at least two metal atoms chosen from the group consisting of: molybdenum, rhenium, tungsten, tantalum, and niobium. For example, the metal cluster may comprise six molybdenum atoms bounded one to another other and forming an octahedron. In a variant, the metal cluster comprises six rhenium atoms bounded one to another and forming an octahedron. In a further variant, the metal cluster comprises six tungsten atoms bounded one to another and forming an octahedron.

The metal cluster is usually surrounded by ligands, such as face-capping ligands or edge-bridging ligands, together named inner ligands.

A "ligand" is an ion or molecule that binds to the metal cluster to form a coordination complex. The bonding between the metal cluster and the ligand usually involves formal donation of one or more of the ligand's electron pairs.

"Face-capping ligands" are ligands that are located normally to the centre of one face of the polyhedron, *i.e*. the virtual line passing through the ligand and the centre of the face of the polyhedron is orthogonal to that very face.

"Edge-bridging ligands" are ligands that are located normally to the middle of a metal-metal bond, *i.e*. the virtual line passing through the ligand and the middle of the metal-metal bond is perpendicular to that very metal-metal bond.

The metal cluster with the inner ligands surrounding it is referred to as a "cluster core".

The metal atom cluster also comprises additional ligands that stabilise the cluster core. These additional ligands are apical ligands.

"Apical ligands" are ligands located facing the vertexes of the polyhedron. The cluster core with the apical ligands is referred to as a "cluster unit".

The cluster unit may be neutral. Thus, it can per se exist in solid state. The cluster unit may be ionic, *i.e*. it has a negative, or respectively positive, charge. Thus, it needs at least one counter ion, *i.e*. a compound which has a charge of opposite sign: positive, or respectively negative, charge. The sum or the charge of the counter ion(s) equal that of the cluster unit.

The metal cluster is surrounded by at least one functional constituent. The functional constituent enables the metal cluster to strongly interact with the organic matrix. Binding of the metal cluster to the organic matrix avoid phase segregation within the material.

The functional constituent may be one of the apical ligands or the counter ion. Thus, the functional constituent may be bound to the metal cluster by covalent bond(s) or by ionic bond(s).

A "covalent bound" is a chemical bond that involves the sharing of pairs of electrons between two atoms or groups of atoms. The sharing of electrons allows each atom to attain the equivalent of a full outer shell, corresponding to a stable electronic configuration.

An "ionic bond" is a chemical bond that is formed through electrostatic attractions between two oppositely charged atoms or groups of atoms.

If the functional constituent is bound to the metal cluster by ionic bond(s), it can take various positions, enabling the metal cluster to be incorporated into the organic matrix in higher concentration than in the case the functional constituent is bound to the metal cluster by covalent bond(s), because ionic bond(s) results in a more flexible relative location of the metal cluster and the functional constituent than covalent bond(s), which is rather rigid. For example, a PMMA organic matrix containing 10 wt.%, with respect to the total weight of the material, of metal cluster wherein the functional constituent is bound to the metal cluster by ionic bond(s) remains soluble even in organic solvents and can be deposited in a film like manner. Whereas, a PMMA organic matrix containing 0.5 wt.%, with respect to the total weight of the material, of metal cluster, wherein the functional constituent is covalently bound to the metal core, is already totally reticulated and thus insoluble in organic solvent.

The bonding flexibility of the functional constituent enables to customise mechanical and physicochemical properties of the organic matrix.

The functional constituent may comprise a polymerisable portion. Thus, the functional constituent may help in reticulation of the polymeric organic matrix even at very low concentrations of the metal cluster. Further, properties of the material can be customised by selecting the nature of the metal cluster-organic matrix bonding, i.e. the way the polymerisable portion is bound to the metal cluster. Thus, behaviour of the material can go from that of the thermoplastics to that of the thermosets. The material can be made thermo- or photocrosslinkable by the polymerisable portion of the functional constituent.

The polymerisable portion comprises at least one polymerisable functional group. The polymerisable functional group may be chosen from the group consisting of: double carbon-carbon bonding, triple carbon-carbon bonding, an azide function, a methacrylate function, an acrylate function, an amine function, a carboxylic function, an aldehyde function, a hydroxyl function, an alkoxy function, a bromine atom and a chlorine atom.

Acrylate, methacrylate, double carbon-carbon bond or triple carbon-carbon bond are preferred for radical polymerisation with the polymers or monomers of the polymer matrix. Triple carbon-carbon bond and azide function are preferred for Huisgen coupling reactions with the polymers or monomers of the polymer matrix. Amine, carboxylic functions are preferred for polyamide synthesis, *i.e*. Nylon 6-6. Hydroxyl, alkoxy functions, bromine and chloride atoms are preferred for anionic polymerisation with the polymers or monomers of the polymer matrix.

If the functional constituent is a polymerisable apical ligand or a grafted polymerisable constituent, it enables to reticulate a polymeric organic matrix through the metal clusters even at very low concentration of the metal clusters.

If the functional constituent is a polymerisable counter ion, it enables to retain the luminescent properties of the metal clusters whatever the polymeric organic matrix is and to reach high concentrations of metal cluster (up to 50 wt% with respect to the total weight of the material, and even higher), while assuring the material's homogeneity. Also, luminescent metal clusters with polymerisable counter ions have improved workability compared to other types of luminescent metal clusters; they ease the manufacture of the materials.

Examples of polymerisable apical ligands are chosen from the group consisting of: methacrylate, methyl methacrylate, acrylate, vinyl-pyridine, and mixtures thereof.

The functional constituent may also be a mesomorphic promoter. A mesomorphic promoter is an anisotropic organic group able to generate liquid crystalline properties and as such may be included in a liquid crystal matrix and will react just like the liquid crystal matrix. For example, the mesomorphic promoter may be an ammonium organic cation bearing three cyanobiphenyloxy units linked to the ammonium head via alkyl chains preferably containing 10 methylene groups, or an ammonium organic cation bearing two cyanobiphenyl units linked via alkyl chains, which length may vary but preferably containing 10 methylene groups, to the ammonium head.

In another example, the mesomorphic promoter is an apical ligand linked to the metal center via a metal-oxygen bond of the carboxylate function of a gallic acid derivative containing two alkyl chains which length may vary but preferably containing 10 methylene groups terminated by cyanobiphenyloxy units.

The cluster unit has a nanometric size, preferably between about 0.5 to about 20 nm, more preferably between about 0.5 to about 2 nm. Contrary to nc-Si, the luminescent metal clusters' size is perfectly defined and can be easily functionalized with up to six organic moieties yielding organic/inorganic nanomaterials such as polymers, liquid crystals, dendrimers, etc.

For example, the metal cluster is surrounded by inner ligands and apical ligands, the resulting cluster unit can have the following formula:

[MₐQ_{b}X_{c}]^{d-},

wherein M represents a metal atom of the metal cluster, a ranging from 2 to 20, preferably from 2 to 12, Q and X represent the ligands,
Q representing a face-capping ligand or an edge-bridging ligand, b ranging from 3 to 30, preferably from 8 to 12,
X representing an apical ligand, c ranging from 2 to 50, preferably 6, and
d ranging from 1 to 12, preferably 2 to 4.

For example, the cluster unit may have the following formula:

[M₆Q₈X₆]²⁻,

X being a halogen chosen from the group consisting of: fluorine (F), chlorine (Cl), bromine (Br), iodine (I), astatine (At), carbon (C), nitrogen (N), sulphur (S), boron (B), oxygen (O), or hydrogen (H), or a mixture thereof.

Such a cluster unit exhibits in liquid or solid state, specific electronic, (e. g.: reversible electron oxidation enabling to pass in a reversible manner from a magnetic form to a luminescent form), magnetic (i.e. paramagnetic behaviour when it has an odd number of valence electrons) and photophysical (e.g. large emission window from UV to visible light and large emission window from visible light to near-IR, generation of singlet oxygen, photocatalytic properties under UV or sunlight irradiation) properties. These properties are related to the number of metallic electrons available for metal-metal bonds. In particular, they are highly emissive in the red/near infra-red region. Red region is usually considered as covering wavelength from about 400 nm to about 700 nm. Near infra-red region is usually considered as covering wavelength from about 700 nm to about 2500 nm.

The X ligands can be substituted with inorganic or organic ligands, without alteration of the cluster core and, thus, providing a cluster unit in the form of an elementary building block usable for the design of material with liquid crystalline properties, supramolecular architectures, polymeric frameworks or nanomaterials with unique properties.

The material can be used for the manufacture of optic fibres, C band communication optical emitting sources or C band communication optical amplifiers, O band communication and optical emitting sources or to O band communication optical amplifiers. Manufacturing costs are lower compared to those of the existing technologies.

For example, erbium ions Er³⁺ emits at 1540 nm, what lies within C band communication wavelengths (15030 nm to 1565 nm), therefore, erbium ions are preferred for such applications. Neodyme ions Nd³⁺ emits at 1319 nm, what lies within O band communication wavelengths (1260 nm to 1360 nm), and can thus be used preferentially for such applications. Ytterbium ions Yb³⁺ emit at 980 nm and can be used in laser applications

### Method for producing the material

The method comprises the furniture of a metal cluster precursor and a functional constituent source, *i.e*. a compound that can react with the metal cluster precursor and yield the functional constituent of the final metal cluster.

The metal cluster precursor and the functional constituent source are mixed together, eventually under gentle heating for yielding a concentrated cluster mother solution. During mixing the metal cluster precursor and the functional constituent source react together, yielding the final metal cluster.

The cluster mother solution is then mixed with a monomer, a polymerisation initiator and a rare earth precursor before subsequent copolymerisation yielding the material.

### Measurement methods

### Solid state luminescence spectra

Solid state luminescence properties were performed on 1.90±0.03 mm thick pellets at 25°C by mean of an argon laser (Coherent Innova 90 C). A 476.5 nm excitation wavelength which is a nonresonant wavelength for the erbium ion, was used.

The spot size of the laser beam was measured by a "moving knife-edge" method and Ophir-spiricon pyrocam and was found to be 0.7 mm at 1/e² of the maximum intensity. These measurements were made by using the standard synchronous detection techniques using a lock-in amplifier (SP830 DPS) trig at the chopper reference frequency of 9 Hz.

The spectra were not corrected to the spectral response of the experimental set up.

The sample holder is made such that pellets are positioned in the same reference plane. This reference plane is perpendicular to the direction of detection and at 45° of the direction of laser excitation.

After positioning, each pellet is exactly in the same geometric conditions of excitation as its predecessor and therefore the results of the different pellets are comparable between each other.

Infrared luminescence spectra in the range of 1400-1700 nm were obtained at 20°C using the 1 m single grating monochromator (Jobin Yvon) (THR-1000) and a liquid-nitrogen-cooled germanium detector North Coast EO-817 (250V, +12V), with an excitation laser power of 347 mW.

The same time three wave pass filter was used to cut the laser and second order: LPF-600 (CVI-Mellesgriot) and PH1100 and PH1200 (Thorlabs).

### Absorption spectra

The absorption spectra were carried out by mean of Perkin-Elmer spectrophotometer (Lambda 1050) in specular transmission mode.

### Examples

### Example 1

In this example, the material comprises an organic matrix, erbium ions homogeneously distributed throughout the organic matrix, and anionic octahedron molybdenum clusters as sensitiser for the erbium ions.

Anionic octahedron molybdenum clusters (Mo₆ clusters) have luminescence properties very close to those of nc-Si. Mo₆ clusters have a nanometric size with a broad excitation spectrum (from the ultraviolet domain to the visible one) and a broad emission spectrum (from about 552 about 900 nm) that covers the absorption spectrum of erbium ions. Since Mo₆ clusters are anionic, they are associated with inorganic or organic counter cations.

For example, a first material was obtained, comprising one metal cluster for about every 130 erbium ions. Compared to a second material not comprising any metal clusters but identical otherwise to the first material, the first material exhibits erbium ion luminescence with intensity going up to four times that of the second material.

### Example 2

This is an example of a method for producing the material of example 1. In example 2, the Mo₆ clusters is scattered throughout the organic matrix, which is a polymeric organic matrix, through copolymerisation of a monomer and the Mo₆ clusters on which polymerisable organic ligands are grafted.

Erbium ions are incorporated into the polymeric organic matrix through the erbium precursor Er(tmhd)₃. This erbium precursor is commercially available and enables to reach erbium ion concentrations which are optimum for the use mentioned above.

### Example 3

This is example of a method for producing the material of example 1. In example 3, the Mo₆ clusters is scattered throughout the organic matrix, which is a polymeric organic matrix, through copolymerisation of a monomer and the Mo₆ clusters associated to polymerisable counter cations.

Erbium ions are incorporated into the polymeric organic matrix through the erbium precursor Er(tmhd)₃. This erbium precursor is commercially available and enables to reach erbium iron concentrations which are optimum for the use mentioned above.

### Example 4

In this example 4, [n-Bu₄N]₂[Mo₆Br₈F₆] is provided as metal cluster precursor and methacrylic acid as polymerisable portion source.

[n-Bu₄N]₂[Mo₆Br₈F₆] and methacrylic acid (CH₂C(CH₃)COOH) are mixed together, under gentle heating (about 100°C) for yielding a concentrated cluster mother solution with concentration of 0.015 mol/L. During mixing [n-Bu₄N]₂[Mo₆Br₈F₆] and methacrylic acid react together through a metathesis reaction, yielding the final metal cluster [n-Bu₄N]₂[Mo₆Br₈(CH₂C(CH₃)COO)₆]. This metathesis reaction is an acido-basic reaction leading to the grafting in apical position and via covalent Mo-O bond formation of six methacrylate moieties with liberation of fluoric acid HF.

The cluster mother solution is then mixed with methylmethacrylate provided as monomer, azobisisobutyronitrile as polymerisation initiator (0.02 wt.% with respect to the total weight of reagents) and Er(tmhd)₃ (at various concentrations, namely 0.5, 0.9 and 1.3 wt.%, with respect to total weight of reagents) before subsequent copolymerisation at 60°C in an ultrasonic bath for 3 hours and then at same temperature without sonication during 72 hours, yielding the material.

The three obtained materials are summed up in table 1.

**Table 1**

| | Wt.% of Er³⁺ | [Er³⁺] (molecules/cm) | Wt.% of cluster | [cluster] (molecules/cm) | Td °C |
|---|---|---|---|---|---|
| P_{0.5C} | 0.50 | 4.2·10¹⁸ | 0.25 | 7.74·10¹⁷ | 410 |
| P_{0.9C} | 0.90 | 7.1·10¹⁸ | 0.25 | 7.74·10¹⁷ | 410 |
| P_{1.3C} | 1.30 | 10.1·10¹⁸ | 0.25 | 7.74·10¹⁷ | 410 |

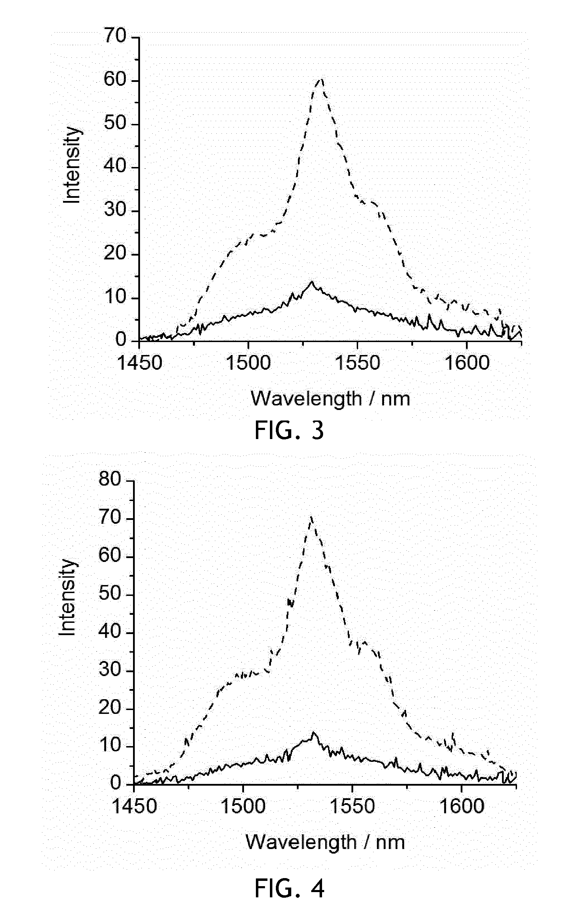

Solid state luminescence properties at 25°C upon excitation at wavelength of 476.5 nm were measured on a photoluminescence bench with an Innova 90C Argon CW laser, on 1.90±0.03 mm thick pellets. Results of these measurements are showed in figures 2 to 4 (dashed lines).

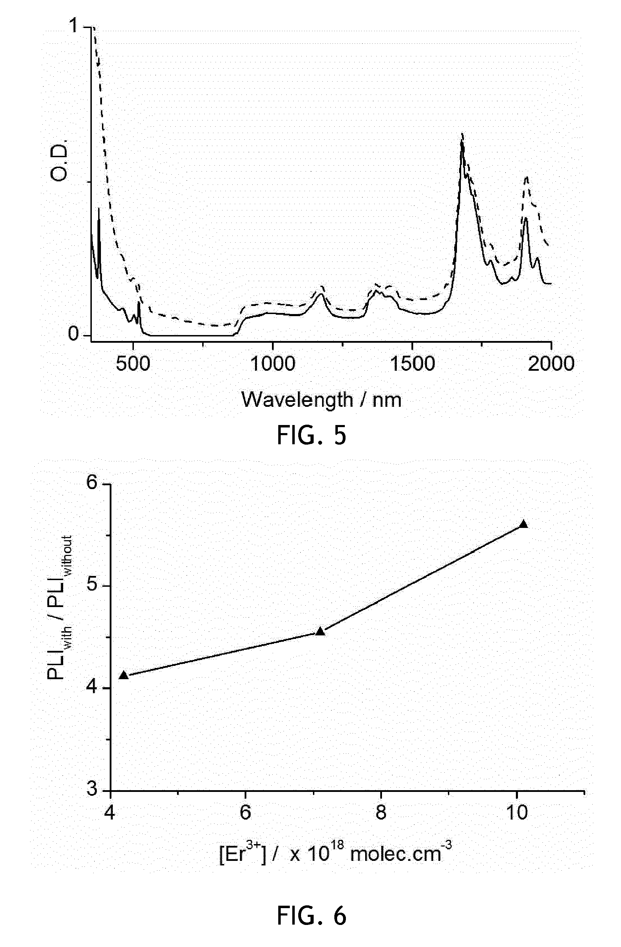

Solid state absorption spectrum for P_{1.3C} was measured with a UV-Visible light Perkin Elmer spectrophotometer and is represented in figures 5 (dashed line).

### Example 5

In this example the rare earth ion is Yb³⁺ and is surrounded by three dipicolinate ligands leading to a [Yb(dipicolinate)₃]³⁻ anion which charge is counter balanced by three monocharged ammonium organic cations bearing two cyanobiphenyl units linked via alkyl chains containing ten methylene groups yielding compound 1.

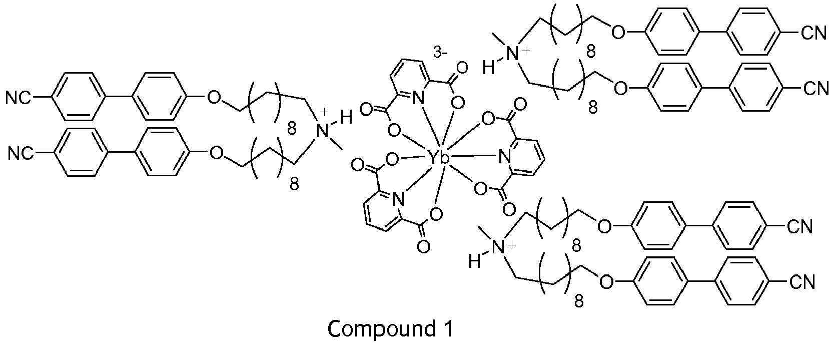

Compound 1 is synthesised as follows.
1. Synthesis of Intermediate 1: 14.34 mL of 1,10-dibromodecane (Br-(CH₂)₁₀-Br) (64.03 mmol) is added to a solution containing 2.5 g of 4-hydroxybiphenyl-4-carbonitrile (NC-biPhen-OH) (12.81 mmol) and 3.54 g of K₂CO₃ (25.62 mmol) in 125 mL of butan-2-one (solvent). The resulting mixture is stirred overnight under reflux. After filtration, washing with dichloromethane (CH₂Cl₂) and evaporation of the solvent, the product is purified by silica gel column chromatography (CH₂Cl₂/pentane 9:1). The pale yellow solid is then filtrated and washed with pentane (C₅H₁₂). The product is dried at 60°C overnight under vacuum to obtain Intermediate 1 as white crystalline solid (3.87 g, 9.34 mmol, 73%).
   Intermediate 1: ¹H NMR (300 MHz, CDCl₃) : 1.20-2.0 (16H, m), 3.43 (2H, t, J=6.8 Hz), 4.03 (2H, t, J=6.6 Hz), 7.01 (2H, d, J=8.7 Hz), 7.54 (2H, d, J=8.7 Hz), 7.62-7.75 (4H, m).
   ¹³C NMR (75 MHz, CDCl₃) : 26.01, 28.15, 28.74, 29.21, 29.32, 29.35, 29.43, 32.81, 34.03, 68.15, 110.05, 115.10, 119.11, 127.07, 128.32, 131.27, 132.56, 145.29, 159.81.
   ESI-MS : [M+Na]+ = 436.1252, [M+K]+ = 452.1014 a.m.u.
   Elemental analysis: C, 66.59 %; H, 6.8 %; and N, 3.32 %. C₂₃H₂₈NOBr requires: C, 66.67 %; H, 6.81 %; and N, 3.38 %.
2. Synthesis of Intermediate 2: 2 g of Intermediate 1 (5 mmol) is mixed with 40 mL of a solution containing 2 mol of methylamine in tetrahydrofurane (THF). The reaction is stirred at room temperature for 48 h. After evaporation of solvent, 50 ml of dichloromethane are added to the residue. The organic solution is washed three times with 50 ml of water. The organic phase is dried over magnesium sulphate and the solvent evaporated. The product is purified by column chromatography (DCM/MeOH: 100/0 to 94/4). Yield is 74 %.
   In a second step 0.88 g of the obtained amine (3.5 mmol) and 1 g of Intermediate 1 (2.4 mmol) are mixed with 0.2 g of NaHCO₃ (2.4 mmol) in 55 mL of acetonitrile. The reaction is heated at 130°C for 48 h in a closed reaction vessel. Solvent is removed by evaporation. Column chromatography purification (100/0 to 94/6) is used to isolate Intermediate 2. Yield is 50 %.
   Intermediate 2: ¹H-NMR (300 MHz, CDCl₃): 1.31-1.45 (28H, m), 1.77-1.81 (8H, m), 2.7 (3H, s, CH₃), 2.73 (2H, m, CH₂-N), 2.88 (m, 2H, CH₂-N), ,4.00 (4H, t, J = 6.6 Hz), 6.96 (4H_{Ar}, d, J = 8.7 Hz), 7.53 (4H_{Ar}, d, J = 8.7 Hz), 7.66 (8H_{Ar}, q, J= 8.4 Hz), 12.2 (br, 1 H, N-H).
   ¹³C-NMR (400 MHz, CDCl₃): 22.5-29.3 (-CH₂-), 39.8 (N-CH₃), 55.8 (N-CH₂), 68.1 (O-CH₂) 109.9 (C^{Ar}-CN), 1115.0 (C^{Ar}) 119.1 (CN), 127.0 (C^{Ar}), 128.3 (C^{Ar}), 131.2 (C^{Ar}), 132.5 (C^{Ar}), 145.2 (C^{Ar}), 159.8 (C^{Ar}-O).
   Mass-spectroscopy: ESI [C47H60N3O2]⁺: 698.4682 a.m.u.
   Elemental analysis: C, 76.41%; H, 8.25%; and N, 5.77 %. C₄₇H₆₀N₃O₂Cl requires: C, 76.85 %; H, 8.23 %; and N, 5.72 %. 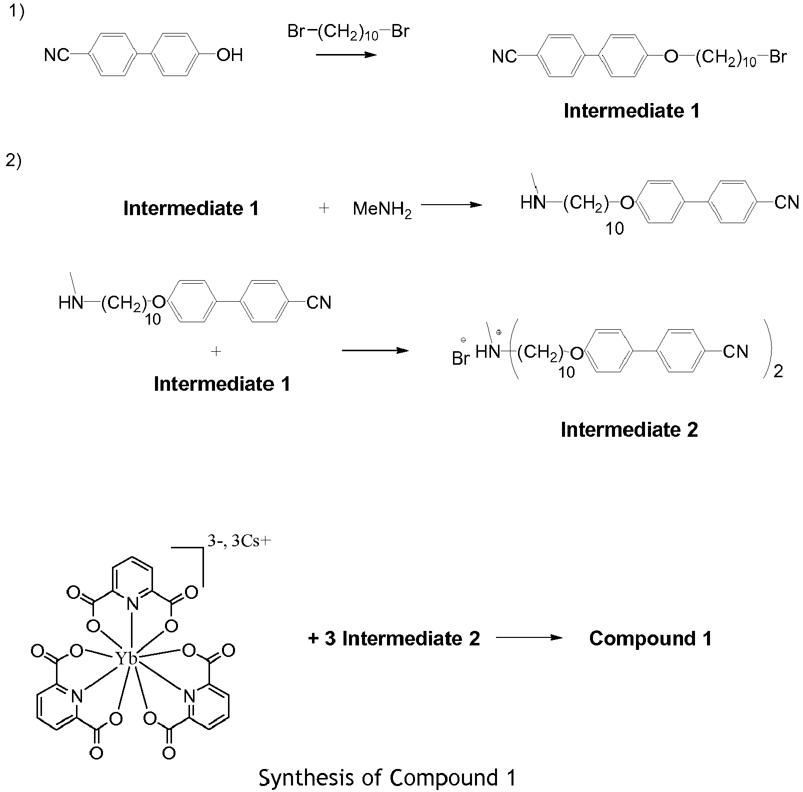
3. Synthesis of compound 1: 50 mg of Intermediate 2 (0.064 mmol, 3eq) is dissolved in 5 mL of dichloromethane. 18 mg of Yb(dipicolinate)₃Na₃·4H2O (0.022 mmol,1 eq) is dissolved in minimum amount of water (about 1-2 mL). The dichloromethane solution is added drop-wise into the aqueous solution. After the addition is complete, the mixture is stirred for 1 hour at 40°C. Aqueous and dichloromethane phases are separated and the organic phase dried out by evaporation and under vacuum to give compound 1 as a white pasty solid.
   Elemental analysis: C, 70.44%; H, 7.48%; and N, 5.87 %. C₁₆₂H₁₈₉N₁₂O₁₈Yb requires: C, 70.36 %; H, 6.89 %; and N, 6.08 %.

The cluster unit is an octahedral molybdenum anionic cluster of formula [Mo₆Br₈(CN)₆]²⁻ which charge is counterbalanced by two monocharged ammonium organic cations bearing three cyanobiphenyl units linked via alkyl chains containing ten methylene groups yielding compound 2.

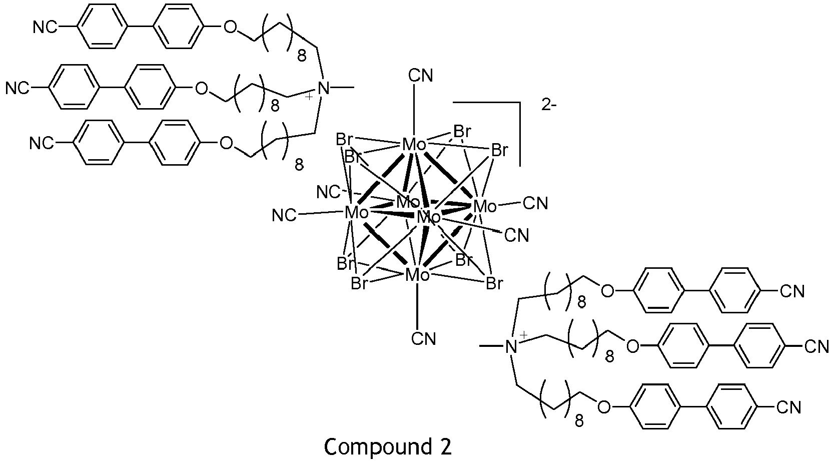

Compound 2 is synthesised as follows.
1. Synthesis of K₂Mo₆Br₈(CN)₆ (Intermediate 3): 0.3g of potassium cyanide (KCN) is dissolved in 20ml of methanol (MeOH) under heating at 50°C. After full dissolution of KCN, 1g of molybdenum dibromide (MoBr₂) is added thereto. The mixture is stirred during 24 h at 50°C. The mixture is then cooled to room temperature, filtered and contains K₂Mo₆Br₈(CN)₆ at a concentration of 32.6 10⁻³ mol·L⁻¹.
   EDAX: results in good accordance with expected atomic percentage ratio.
2. Synthesis of tris(ω-(4-(4'-cyanobiphenylyl)oxy)decyl)methylammonium bromide (Intermediate 4): 373 mg of anhydrous potassium carbonate (K₂CO₃) (2.7 mmol), 3 mL of ethanol and 11.4 mg of a solution containing 2 mol of methylamine in THF (representing 0.36 mmol of methylamine) are added to a solution comprising 447 mg of Intermediate 1 (1.08 mmol). The mixture is heated in a close reaction vessel for 24 h at 95 °C. The mixture is then cooled to room temperature and the solvent evaporated under vacuum. Dichloromethane is added thereto and the solution filtered off. Dichloromethane is evaporated under vacuum and the product purified by silica gel chromatography (DCM:MeOH form 1:0 to 96:4).
   Itermediate 4: ¹H-NMR (300 MHz, CDCl₃): 1.34-1.39 (36H, m), 1.71-1.83 (12H, m), 3.34 (3H, s), 3.44 (6H, m), 4.00 (6H, t, J = 6.6 Hz), 6.99 (6H_{Ar}, d, J = 8.7 Hz), 7.53 (6H_{Ar}, d, J = 8.7 Hz), 7.66 (12H_{Ar}, q, J= 8.4 Hz).
   Mass-spectroscopy: [M]⁺: 1031.6772 a.m.u.
   Elemental analysis: C, 73.29 %; H, 7.80 %; and N, 4.76 %. C₇₀H₈₇N₄O₃Br·2H₂O requires: C, 73.21 %; H, 7.99 %; and N, 4.88 %.
3. Synthesis of compound 2: a solution containing 0.097 g of Intermediate 4 (0.067 mmol) in hot ethanol is added to a methanol solution of K₂Mo₆Br₈(CN)₆. The mixture is heated for 1 hour using reflux to assure complete precipitation of the compound 2. Compound 2 is purified by washing three times in hot water and three times in hot ethanol. Compound 2 is dried under vaccum.
   Compound 2: ¹H-NMR (300 MHz, CDCl₃): 1.34-1.39 (36H, m), 1.71-1.83 (12H, m), 3.21 (3H, s), 3.36 (6H, m), 4.00 (6H, t, J = 6.6 Hz), 6.99 (6H_{Ar}, d, J = 8.7 Hz), 7.53 (6H_{Ar}, d, J = 8.7 Hz), 7.66 (12H_{Ar}, q, J= 8.4 Hz).
   Elemental analysis: C, 49.86%; H, 5.10%; and N, 4.95%. Mo₆Br₈C₁₄₆H₁₇₄N₁₄O₆·6H₂O requires: C, 49.48 %; H, 5.29 %; and N, 5.53 %.
   EDAX results: no K.

Both compounds are fully miscible in all proportions. Their mixtures are also miscible in all proportions with 4'-(pentyloxy)-[1,1'-biphenyl]-4-carbonitrile (hereafter 5-OCB), a compound with liquid crystalline properties.

Compound 1 and compound 2 exhibit liquid crystalline properties.

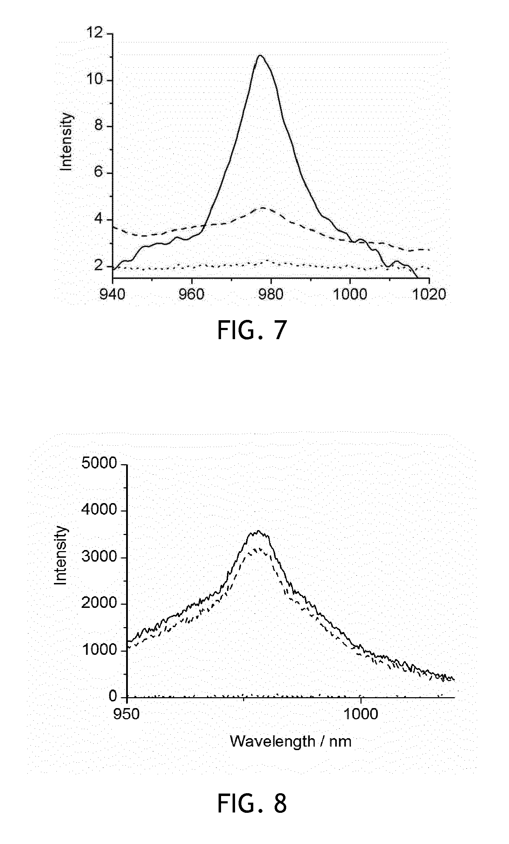

Luminescence studies and Polarised Optical Microscopy (POM) studies were realised on a Nikon microscope equipped with a Linkam hotstage and an irradiation source Nikon intensilight with a bandpass filter centred at 350 nm (330/ 380 nm). Spectra for four samples were recorded with an ocean optics usb 2000+ spectrophotometer (figure 7).

In figure 7, the plain line corresponds to the sample (S_{y/c/5OCB}) that comprises compound 1 and compound 2 in 5-OCB. The weight ratio of compound 1:compound 2:5-OCB is 1:1:1. The sample (S_{y/c/5OCB}) is prepared by dilution of the same amount of each constituent in dichloromethane and subsequent evaporation of the solvent followed by a drying step at 130°C during five minutes. The dashed line corresponds to a mixture of compound 1 and compound 2 only in solution at a ratio of 1:1 (S_{y/c}). The sample is prepared by dilution of the same amount of each constituent in dichloromethane and subsequent evaporation of the solvent followed by a drying step at 130°C during five minutes. The dotted line corresponds to compound 1 only (S_{y}) and the dotted-dashed line corresponds to compound 2 only (S_{c}).

While the luminescence of Yb³⁺ is barely detected for (S_{y}), the use of cluster increases the luminescence signal at 980 nm by a factor 6 according to intensity maxima (Imax) as is observable from table 2 below.

**Table 2**

| Sample | Imax at 980 nm |
|---|---|
| S_{y} | 1.8 |
| S_{y/c} | 4.5 |
| S_{y/c/5OCB} | 11.7 |

For sample S_{y/c}, nematic phase is observed between 20°C and 80°C according to DSC measurements.

For sample Sy_{/c/5OCB}, nematic phase is observed between 20°C and 65°C according to POM studies.

Luminescence studies and POM studies were realised on a Nikon microscope equipped with a Linkam hotstage, an irradiation source Nikon intensilight with a bandpass filter centred at 350 nm (330 / 380 nm). Spectra were recorded with an ocean optics usb 2000+ spectrophotometer.

### Example 6

In this example the compound containing the rare earth ion is compound 1.

The cluster unit is an octahedral molybdenum anionic cluster of formula [Mo₆Br₈L₆]²⁻, where L is an apical ligand and is a gallate derivative bearing two cyanobiphenyl units linked via alkyl chains containing ten methylene groups in 3 and 5 positions, the charge of the cluster unit is counterbalanced by two ammoniums of formula (n-C₄H₉)₄N⁺, the whole yielding compound 3 of formula [(n-C₄H₉)₄N]₂[Mo₆Br₈L₆].

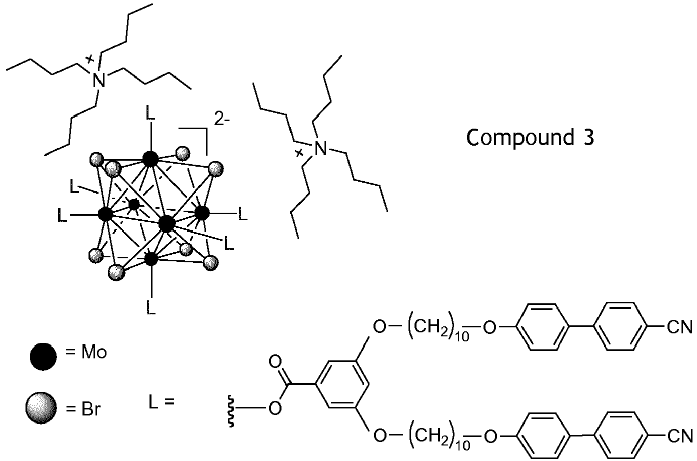

Compound 3 is synthesised as follows.
1. Synthesis of MeOL: 338 mg of 3,5-dihydroxymethylbenzoate (2.20 mmol) is added to 150 mL of a solution comprising 2 g of Intermediate 1 (4.83 mmol) and 1.52 g of K₂CO₃ (11 mmol) in butan-2-one. The mixture is stirred under reflux and argon atmosphere for 2 days. 150 mL of water is then added thereto and MeOL is extracted with four times 50 mL of DMC. The organic phase is washed with three times 50 mL of water and dried over anhydrous magnesium sulphate (MgSO₄), filtrated and the solvent is removed under vacuum. MeOL is purified by silica gel column chromatography (CH₂Cl₂:pentane = 8:2). MeOL is dried at 60°C under vacuum overnight and obtained as a white solid.
   MeOL: ¹H NMR (300 MHz, CD₂Cl₂) 7.67 (8H, q, J = 8.7 Hz), 7.54 (4H, d, J = 8.7 Hz), 7.18 (2H, d, J = 2.3 Hz), 7.00 (4H, d, J = 8.7 Hz), 6.65 (1 H, t, J = 2.3 Hz), 4.00 (8H, m), 3.91 (3H, s), 1.80 (8H, m), 1.57-1.28 (24H, m).
   ¹³C NMR (75 MHz, CD₂C₂): 25.97, 25.99, 29.17, 29.22, 29.34, 29.36, 29.50, 52.03, 68.17, 68.36, 106.21, 107.43, 110.01, 114.98, 119.01, 126.94, 128.26, 131.08, 132.00, 132.55, 145.08, 159.87, 160.24, 166.69.
   ESI-MS (+): [M+Na]+ = 857.4498, [M+K]⁺ = 873.4240 a.m.u.
   Elemental analysis: C, 76.77%; H, 7.45 %; and N, 3.23 %. C₅₄H₆₂N₂O_{6.}·0.5H₂O; requires: C, 76.84 %; H, 7.52 %; and N, 3.32 %.
2. Synthesis of HL: 5 mL of a solution containing 119 mg or potassium oxide (KOH) (2.12 mmol) in water is added to 100 mL of a solution containing 1.18g of MeOL (1.41 mmol) in a 1:1 mixture of THF:EtOH. The resulting mixture is stirred with reflux for 4 h. After removal of solvent under vacuum and addition of 250 mL of water, aliquots of concentrated HCl are added until pH = 1 and the solution was stirred for 6h. Then, HL is filtered, washed with water and crystallised in ethanol as a white powder (834 mg, 1.02 mmol, 72 %).
   HL: ¹H NMR (300MHz, d⁶-DMSO): 7.82 (8H, m, Ha+Hb), 7.66 (4H, d, J = 8.7 Hz, Hc), 7.03 (4H, s, Hd ), 7.00 (2H, s, Hi), 6.45 (1 H, s, Hg), 3.93 (8H, m, He), 1.66 (8H, m, Hf), 1.30 (24H, m, -(CH₂)₆-).
   ¹³C NMR (75 MHz, d⁶-DMSO): 25.4, 28.56, 28.60, 28.67, 28,85, 38.95, 39.11, 39.28, 39.45, 39.54, 39.61, 39.71 , 39.78, 39.87, 39.95, 40.04, 67.31, 67.47, 103.08, 107.10, 114.91, 118.89, 126.63, 128.12, 130.05, 132.62, 144.14, 159.07, 159.27, 168.11 ; IR (KBr) = 1673 cm⁻¹ (u_{C=O} monomer),1714 cm⁻¹ (U_{C=O} dimer) .
   ESI-MS(-) : [M-H]⁻= 819.4371 a.m.u.
   Elemental analysis: C, 74.49 % ; H, 7.11 % ; and N, 3.12 %. C₅₃H₆₀N₂O₆.2H₂O; requires: C, 74.27 %; H, 7.53 %; and N, 3.27%.
3. Synthesis of Compound 3: Compound 3 is obtained by mixing 6 equivalents of HL (44.8mg, 54.6µmol) with one equivalent of (nBu₄N)₂[Mo₆Br₈F₆] (15mg, 8.3µmol) in 10ml of THF. The mixture is heated under stirring until complete evaporation of the solvent three times. The obtain solid is dissolved in CHCl₃. The obtained solution is filtered and dried under vacuum to give the Compound 3.
   Compound 3: ¹H NMR (300MHz, d⁶-DMSO): 7.84 (72H, m, Ha+Hb+Hc), 7.04 (36H, m, Hd+Hi ), 6.66 (6H, s, Hg), 3.99 (48 H, m, He), 3.17 (16H, m ), 1.84-1.09 (224H, m,), 0.94 (24H, t,).
   ¹³C NMR (75 MHz, CDCl₃) : 13.91, 26.01, 29.15, 29.18, 29.20, 29.31, 29.33, 29.46, 68.17, 68.34, 108.12, 110.02, 115.09, 119.11, 127.06, 128.31, 131.25, 132.55, 145.28, 159.81, 160.21.
   IR (KBr) = 1616 cm⁻¹ (u_{C=O}).
   Elemental analysis: C, 63.55 %; H, 6.25 %; and N, 2.99 %. C₃₅₀H₄₂₆N₁₄O₃₆Br₈MO₆ requires: C, 63.50 %; H, 6.49 %; and N, 2.96 %.

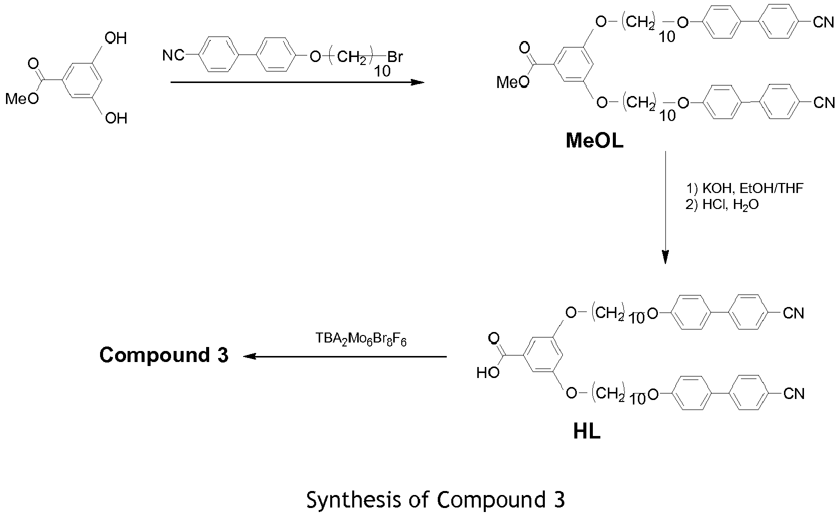

Compound 3 exhibits liquid crystalline properties a nematic phase between 94°C and 82°C followed by a smectic A phase between 82°C and 21 °C according to DSC and POM measurements.

Luminescence studies and POM studies were realised on a Nikon microscope equipped with a Linkam hotstage and an irradiation source Nikon intensilight with a bandpass filter centred at 350 nm (330/380 nm). Spectra for three samples were recorded with an Ocean Optics USB2000+ spectrophotometer (figure 8).

In figure 8, the plain line corresponds to the sample (T_{y/c}) which contains a mixture of compound 1 and compound 3 at a ratio of 1:1. The dashed line corresponds to a mixture that comprises compound 1 and compound 3 in 5-OCB. The weight ratio of compound 1:compound 3:5-OCB is 1:1:1 (T_{y/c/5OCB}). The dotted line corresponds to compound 1 only (T_{y}).

While the luminescence of Yb³⁺ is barely detected for T_{Y}, the use of cluster increases the luminescence signal at 980 nm by a factor 119 according to intensity maxima (Imax) as is observable from table 3 below.

**Table 3**

| Sample | Imax at 980 nm |
|---|---|
| T_{y} | 30 |
| T_{y/c} | 3575 |
| T_{y/c/5OCB} | 3177 |

For sample T_{y/c}, lamellar columnar phase is observed between 30°C and 95°C according to POM measurements.

For sample T_{y/c/5OCB}, nematic phase is observed between 20°C and 65°C according to POM studies.

Luminescence studies and POM studies were realised on a Nikon microscope equipped with a Linkam hotstage, an irradiation source Nikon intensilight with a bandpass filter centred at 350 nm (330/ 380 nm). Spectra were recorded with an ocean optics usb 2000+ spectrophotometer.

### Example 7

In this example, the compound containing the rare earth ion is compound 1.

The cluster unit is an octahedral molybdenum anionic cluster of formula [Mo₆Br₈Br₆]²⁻ which charge is counterbalanced by two monocharged ammonium organic cations bearing two cyanobiphenyl units linked via alkyl chains containing ten methylene groups to the ammonium head, yielding compound 4. Compound 1 and compound 4 are miscible. Compound 4 is miscible with 5-OCB.

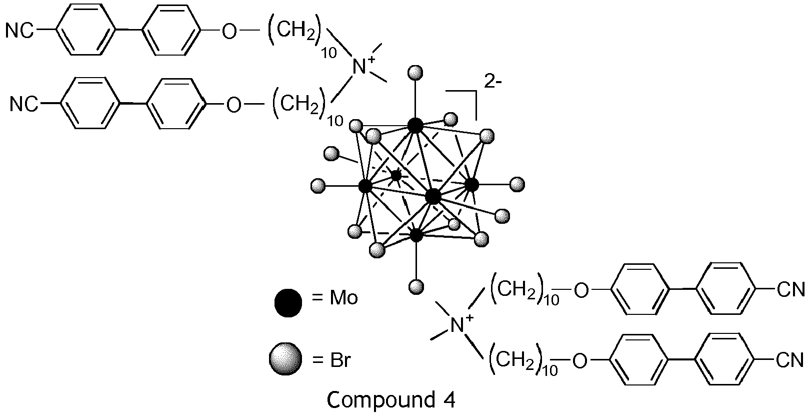

K₂Mo₆Br₁₄ is synthesised according to Xu, W.; Wang, P.; Zheng, Y.-Q, Zeitschrift fur Kristallographie - New Crystal Structures (2006), 221, (2), 107-108.

Then, bis(ω-(4-(4'-cyanobiphenylyl)oxy)decyl)dimethylammonium bromide is synthesised according to: Everaars, M. D.; Marcelis, A. T. M.; Sudholter, E. J. R. Langmuir 1993, 9 (8), 1986.

Compound 4 is obtained by mixing 56.4 µmol of K₂Mo₆Br₁₄ (0.1 g) dissolved in 10 ml of acetone, with 112.8 µmol of bis(ω-(4-(4'-cyanobiphenylyl)oxy)decyl)dimethylammonium bromide (0.090 mg) dissolved in 10 ml of dichloromethane. The mixture is stirred under heating at 60°C in a closed vessel for 1 hour. After evaporation of solvents and addition of 20 ml of dichloromethane, the solution is filtered and evaporated to give compound 4 as a yellow glassy solid.
Compound 4: ¹H NMR (300 MHz, CD₂Cl₂): 1.18-1.87 (64 H, m), 3.28-3.48 (20 H, m), 4.0-4.1 (8 H, t), 7.0-7.1 (8 H, d), 7.55-7.60 (8 H, d), 7.67-7.74 (16 H, m).
Elemental analysis: C, 36.58 %; H, 4.18 %; and N, 2.56 %. C₉₆H₁₂₄N₆O₄MO₆Br₁₄ requires: C, 36.95 %; H, 4.01 %; and N, 2.69 %.
EDAX: no K.

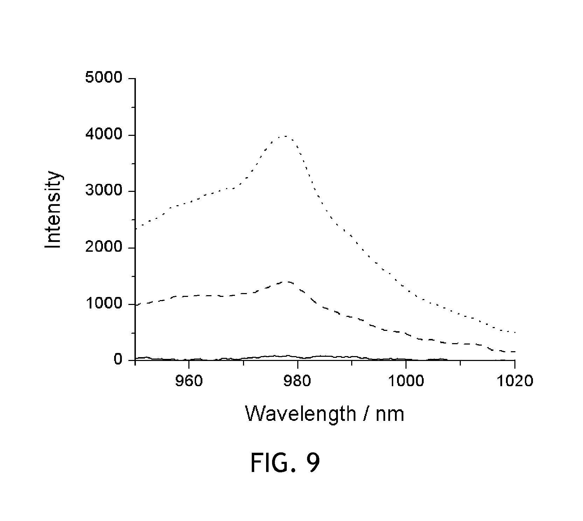

Luminescence studies and POM studies were realised on a Nikon microscope equipped with a Linkam hotstage and an irradiation source Nikon intensilight with a bandpass filter centred at 350 nm (330/ 380 nm). Spectra for three samples were recorded with an ocean optics usb 2000+ spectrophotometer (figure 9).

In figure 9, the dotted line corresponds to the sample (V_{y/c}) which contains a mixture of compound 1 and compound 4 at a ratio of 1:1. The dashed line corresponds to a mixture (V_{y/c/5OCB}) that comprises compound 1 and compound 4 in 5-OCB. The weight ratio of compound 1:compound 4:5-OCB is 1:1:1. The plain line corresponds to compound 1 only (V_{y}).

While the luminescence of Yb³⁺ is barely detected for V_{Y}, the use of cluster increases the luminescence signal at 980 nm by a factor 43 according to intensity maxima (Imax) as is observable from table 4 below.

**Table 4**

| Sample | Imax at 980 nm |
|---|---|
| V_{y} | 93 |
| V_{y/c} | 3980 |
| V_{y/c/5OCB} | 1408 |

Compound 4 does not exhibit liquid crystalline properties. However, according to DSC and POM measurements, sample V_{y/c}, shows a nematic phase between 50°C and 85°C.

For sample V_{y/c/5OCB}, nematic phase is observed between 20°C and 65°C according to POM studies.

Luminescence studies and POM studies were realised on a Nikon microscope equipped with a Linkam hotstage, an irradiation source Nikon intensilight with a bandpass filter centred at 350 nm (330/ 380 nm). Spectra were recorded with an ocean optics usb 2000+ spectrophotometer.

### Comparative example 1

In this comparative example 1, methylmethacrylate provided as monomer was mixed with azobisisobutyronitrile provided as polymerisation initiator (0.02 wt.% with respect to the total weight of reagents) and Er(tmhd)₃ (at various concentrations, namely 0.5, 0.9 and 1.3 wt.%, with respect to total weight of reagents) before subsequent copolymerisation at 60°C in an ultrasonic bath for 3 hours and then at same temperature without sonication during 72 hours.

The three obtained comparative materials are summed up in table 5.

**Table 5**

| | Wt.% of Er³⁺ | [Er³⁺] (molecules/ cm) | Wt.% of cluster | [cluster] (molecules/ cm) | Td °C |
|---|---|---|---|---|---|
| P_{0.5} | 0.50 | 4.2.10¹⁸ | 0 | 0 | 390 |
| P_{0.9} | 0.90 | 7.1.10¹⁸ | 0 | 0 | 390 |
| P_{1.3} | 1.30 | 10.1.10¹⁸ | 0 | 0 | 390 |

Solid state luminescence properties at 25°C upon excitation at wavelength of 476.5 nm were measured on a photoluminescence bench with an Innova 90C Argon CW laser, on 1.90±0.03 mm thick pellets. Results of these measurements are showed in figures 2 to 4 (plain lines).

Luminescence intensity ratios measured at maximum of emission from 1,400 nm to 1,700 nm between pellets with metal clusters and pellets without are presented in figure 6.

Introduction of metal clusters improves the luminescence intensity by factors 4 to almost 6 in comparison with pellets without metal clusters.

Solid state absorption spectrum was measured for P_{1.3} and is represented in figure 5 (plain line).

Although the solid state absorptions of the materials of example 4 and those of comparative example 1 do not exhibit significant differences in the infrared region, in the ultraviolet-visible region, an improvement can be noticed for materials of example 1 with absorption gaining up to 3 times the absorption of materials of comparative example 1 at the same wavelength.

## Claims

1. A material (1) comprising an organic or inorganic matrix (2), rare earth ions (3) within the organic or inorganic matrix, and a sensitiser (4) for the rare earth ions,
wherein the sensitiser comprises luminescent cluster units containing metal atom clusters, the cluster unit being distributed around the rare earth ions, the metal clusters having an absorption spectrum broader than the absorption spectrum of the rare earth ions and emitting waves within the absorption spectrum of the rare earth ion when they are excited, and wherein when the matrix is inorganic, the rare earth ions are trivalent.

2. The material of claim 1, wherein the metal clusters comprises at least two metal atoms chosen from the group consisting of molybdenum, rhenium, tungsten, tantalum and niobium.

3. The material of claim 2, wherein the metal clusters comprise six molybdenum atoms, or six rhenium atoms.

4. The material of any claim 1 to 3, wherein the metal clusters are linked to at least one polymerisable constituent comprising a polymerisable functional group by at least one covalent or ionic bond.

5. The material of claim 4, wherein the polymerisable constituent is an apical ligand of the cluster unit.

6. The material of claim 5, wherein the cluster unit has a negative or positive charge and wherein the polymerisable constituent is an ion with the opposite charge of the cluster unit.

7. The material of any claim 1 to 6, wherein the metal clusters absorbs electromagnetic waves from 100 nm to 800 nm, preferable from 350 nm to 500 nm.

8. The material of any claim 1 to 7, wherein the matrix is an organic matrix, which is a polymeric matrix or a liquid crystal matrix.

9. The material of any claim 1 to 8, wherein the rare earth ions are distributed in the organic matrix from a precursor chosen from the group consisting of, where TR represents the rare earth ion:
TRX₃, with X being a chloride, bromide or iodide anion;
TR(tmhd)₃, TR(fod)₃, TR(dmb)₃Phen, TR(tta)₄, TR(dipicolinate)₃ and mixtures thereof, with tmhd representing 2,2,6,6-tetramethyl-3,5-heptanedionate, fod representing 6,6,7,7,8,8,8-heptafluoro-2,2-dimethyl-3,5-octanedionate, dbm representing dibenzoylmethane, Phen representing 1,10-phenanthroline and tta representing 2-thenoyttrifluoroacetonate, the charge of which is counterbalanced by one or more organic cations.

10. The material of any claim 1 to 9, wherein the rare earth ions are Er³⁺ Nd³⁺ or Yb³⁺_{.}

11. Use of the material of any claim 1 to 10 for the manufacture of optic fibres.

12. Use of the material of claim 10, wherein the rare earth ions are Er³⁺, for the manufacture of telecommunication C band optical emitting sources or telecommunication C band optical amplifiers.

13. Use of the material of claim 10, wherein the rare earth ions are Nd³⁺, for the manufacture of telecommunication O band optical emitting sources or telecommunication O band optical amplifiers.

14. Use of the material of claim 10, wherein the rare earth ions are Yb³⁺, for the manufacture of infrared laser

15. Use of luminescent metal clusters in an organic matrix for boosting luminescence of rare earth ions distributed throughout the matrix, when the matrix is inorganic the rare earth ion is trivalent.
